Europäisches Patentamt

European Patent Office    (11) Publication number:    **0 140 519**

Office européen des brevets    **A1**

(12)    **EUROPEAN PATENT APPLICATION**

(21) Application number: **84305800.9**

(22) Date of filing: **24.08.84**

(51) Int. Cl.⁴: **C 02 F 1/04**
**C 02 F 5/14, C 02 F 5/12**
**C 02 F 5/10**

(30) Priority: **02.09.83 US 528771**

(43) Date of publication of application:
**08.05.85 Bulletin 85/19**

(84) Designated Contracting States:
**AT BE CH DE FR GB IT LI LU NL SE**

(71) Applicant: **PFIZER INC.**
**235 East 42nd Street**
**New York, N.Y. 10017(US)**

(72) Inventor: **Miller, James Walter**
**52 Nantucket Drive**
**Mystic Connecticut(US)**

(72) Inventor: **O'Neill, John Joseph**
**10 Teacher's Drive**
**Norwich Connecticut(US)**

(72) Inventor: **Reitz, Robert Larry**
**RD No. 1 Hartford Road**
**Oakdale Connecticut(US)**

(74) Representative: **Moore, James William**
**Pfizer Limited Ramsgate Road**
**Sandwich Kent CT13 9NJ(GB)**

(54) Use of chelating agents in water desalination.

(57) Processes for the desalination of saline water, especially seawater, which contains hardness ions (e.g. $Ca^{2+}$ and $Mg^{2+}$) and transition metal corrosion ions (e.g. $Fe^{3+}$), and in which an organic polymer antiscalant (e.g. a low molecular weight maleic acid-acrylamide-styrene terpolymer) is being used to control alkaline earth hardness, have been improved by adding a chelating agent to the saline water before, or at the same time as, adding the antiscalant. Typical chelating agents which can be used are citric acid, gluconic acid and hydroxyethylidenediphosphonic acid.

EP 0 140 519 A1

Croydon Printing Company Ltd.

## USE OF CHELATING AGENTS IN WATER DESALINATION

### Background of the Invention

This invention relates to an improvement in processes for the desalination of water.

Water is a ubiquitous chemical substance on the planet earth, and it is essential for sustaining life as we know it. Indeed, approximately 70% of the earth is covered with water – 140 million square miles – and the total volume of this surface water is approximately 330 million cubic miles. Additionally water is a very powerful solvent, particularly for ionic, polar chemicals, and therefore much of the water existing on the earth has varying amounts of dissolved solids, particularly salt (sodium chloride). For example the large oceans, such as the Atlantic and Pacific Oceans, have approximately 35,000 parts per million (ppm) of dissolved solids, mainly sodium chloride.

For a variety of purposes, it is often necessary to reduce substantially the amount of dissolved salt in a given supply of water. For example, it is necessary to reduce the salt concentration of water to about 500 ppm, or lower, in order to render it potable for human use, and sometimes the salt content of industrial waste water must be reduced before the waste water can be returned to rivers or aquifers.

The removal of salt from a water supply is known as desalination, and there are two major types of methods for the desalination of water; these are evaporative processes and membrane processes.

Desalination processes produce water having a lower salt content than the feed water, and, as a consequence, they produce water having an increased salt content than the feed water as a by-product. When desalinating water containing hardness ions (e.g. $Mg^{2+}$ and $Ca^{2+}$), this leads to a major problem of scale build-up. In evaporative desalination processes, the scale deposits on surfaces in heater chambers, thereby inhibiting heat transfer which lowers efficiency. In membrane desalination processes, scale deposits on the membrane, thereby reducing its permeability and therefore its effectiveness.

In the past, one solution to scale build-up has been to add an antiscalant to the saline water, and in this regard certain low molecular weight maleic acid-acrylamide-styrene terpolymers and low molecular weight polymers and copolymers of certain organic, unsaturated carboxylic acids are particularly useful. However, it has been found that if small amounts of certain transition metal ions (e.g. $Fe^{3+}$) are present the effect of the antiscalant is decreased and scale build-up occurs.

Accordingly it is an object of this invention to decrease the adverse effect of the transition metal ions on the antiscalant, and by so doing increasing desalination efficiency.

## Summary of the Invention

In water desalination processes, in which the saline water contains hardness ions and a low molecular weight maleic acid-acrylamide-styrene terpolymer or a low-molecular weight polymer or copolymer of an organic, unsaturated carboxylic acid (e.g. an acrylic acid polymer) is being used to prevent scale build-up (i.e. as an antiscalant), the further presence of transition metal ions, e.g. $Fe^{3+}$, $Cu^{2+}$ or $Ni^{2+}$, leads to decreased efficiency of the antiscalant. However it has now been found that addition of an effective amount of a chelating agent to the saline water before, or at the same time as, addition of the antiscalant decreases the effect of the transition metal ions and restores efficiency of the antiscalant. Typical chelating agents which can be used include citric acid, gluconic acid and hydroxyethylidenediphosphonic acid. The chelating agent is used in an amount substantially sufficient to chelate all the transition metal ions.

## Detailed Description of the Invention

Major methods for water desalination fall into two categories, evaporative processes and membrane processes. Evaporative processes include flash evaporation (FE), multiple-effect distillation (MED) and vapor compression (VC), while membrane processes include reverse osmosis (RO) and electrodialysis.

Flash evaporation consists of introducing heated saline water into a chamber at a lower pressure, such that part of the saline water vaporizes, often with extreme vigor. The vapors thus obtained are condensed and collected by allowing them to come in contact with a number of condensing tubes through which is flowing further cold saline water which is to be desalinated. In this way, the latent heat of condensation of the desalinated water vapor is used to preheat the incoming saline water feed. Such a process is called single stage flash evaporation. In multistage flash evaporation (MFE), a large number of single stage evaporators are assembled in series, such that successively lower flashing pressures are used, and at each stage the condensing of the vapors is used to heat the incoming feed.

In multiple-effect distillation, steam is condensed on one side of a tube and the latent heat of condensation derived from this is used to evaporate saline water on the other side of the tube wall. The vapors so produced are then allowed to condense on a further wall and in so doing the latent heat of condensation again evaporates further saline water on the other side of this latter wall. Each of these fresh water condensation/saline water evaporations is called an "effect". Several effects are arranged in series to make up a multiple-effect distillation apparatus.

Vapor compression is similar to multiple-effect distillation except that it does not use an external heat source, such as steam, as its primary energy for distillation. Instead it relies on compressing water vapor to increase its pressure and therefore its condensation temperature. Condensation takes place on one side of a tube, which acts as a heat transfer surface, and feed saline water is applied to the other side of the heat transfer surface, usually as a film. The latent heat of condensation vaporizes the saline water film.

In reverse osmosis (or hyper-filtration), saline water is forced through a semipermeable membrane by application of a pressure which is in excess of the osmotic pressure of the water being desalinated. Essentially salt-free water passes through the membrane and is collected, leaving more concentrated saline water behind.

In electrodialysis, a series of essentially parallel sheets of membranes are inserted into saline water, thus making a series of compartments. Two types of membranes are used, one type will allow the passage of anions but not cations while the other type will allow the passage of cations but not anions. These two types of membranes alternate. Two electrodes (one positive and one negative) are then placed one at each side of the vessel containing the saline water divided into compartments, and a different effect is observed in alternating compartments. In one alternating set of compartments, the anions migrate to the adjacent compartment in one direction (only) and the cations migrate to the adjacent compartment in the other direction. However, in the other alternating set of compartments, no ions migrate out. Thus the first set of alternating compartments becomes depleted in ions (i.e. dissolved salt) while the second set of compartments becomes more concentrated in dissolved salt. Water taken from the first set of compartments has been desalinated, therefore.

Details of methods used in water desalination are found in "The U.S.A.I.D. Desalination Manual," August 1980, sponsored by United States International Development Cooperation Agency, Office of Engineering, and prepared by CH2M Hill International Corporation.

A common problem encountered in processes for the desalination of saline water is the formation of scale when hardness ions, such as magnesium ($Mg^{2+}$) and calcium ($Ca^{2+}$), are present and the water has alkalinity caused by the bicarbonate-carbonate system ($HCO_3^-/CO_3^{2-}$). Under these conditions, scale (e.g. magnesium hydroxide, calcium sulfate and/or calcium carbonate) precipitates and deposits itself on various surfaces in the desalination apparatus. In evaporative processes, when deposition takes place on surfaces at which heat interchange takes place, e.g. the brine heater chamber and the heat recovery chamber in flash evaporation, this impedes heat transfer and lowers the efficiency of the process. In membrane processes, when deposition takes place on the membrane, this partially clogs the membrane and reduces its permeability to desalinated water or ions.

One solution to scale production has been to add one or more antiscalants to the water prior to desalination. One type of antiscalant which has been used is a low molecular weight polymer (number average molecular weight 500 to 5,000) derived from an organic, unsaturated, carboxylic acid, for example acrylic acid, fumaric acid, itaconic acid, maleic acid or methacrylic acid. These low molecular weight, polymeric antiscalants are often copolymers, and sometimes they incorporate non-carboxylic acid monomers. For example, in evaporative desalination processes, particularly useful antiscalants are methacrylic acid-maleic acid copolymers (U.S. Patent No. 4,390,670) and the maleic acid-acrylamide-styrene terpolymers (U.S. Patent No. 4,065,607). Similarly, in membrane desalination processes, particularly useful antiscalants are acrylic acid homopolymers.

However, when the saline water being desalinated further contains certain transition metal corrosion ions, such as iron ($Fe^{3+}$), copper ($Cu^{2+}$) or nickel ($Ni^{2+}$), these latter ions interfere with the polymeric antiscalants mentioned above, and these latter ions reduce the effectiveness of the polymeric antiscalants. Accordingly, this invention provides a solution to the problem of interference of transitional metal corrosion ions with the above-mentioned antiscalants.

It has now been found that certain chelating agents, when added to the saline water which is to be desalinated, prior to or at the same time as the addition of the antiscalant, nullify the effect of the transition metal corrosion ions. A variety of chelating agents can be used, the major requirements for said agents being that:

(1) they should be stable over the pH range of water supplies normally subjected to water desalination, e.g. from pH 5 to 9;

(2) they should complex more strongly with corrosion metal ions ($Fe^{3+}$, $Cu^{2+}$, $Ni^{2+}$) than with hardness ions ($Mg^{2+}$, $Ca^{2+}$);

(3) they should be readily soluble in water;

(4) they should be non-volatile;

(5) they should be stable at moderately elevated temperatures, e.g. they should have a half-life greater than five hours at temperatures up to 110°C; and

(6) they should be compatible with the antiscalant.

The following is a list of the types of chelating agents which are useful in the process of this invention:

(a) an aliphatic alpha-hydroxy acid selected from the group consisting of citric acid, $HOOCC(OH)(CH_2COOH)_2$;

glucoheptonic acid, $HOOC[CH(OH)]_5CH_2OH$;

gluconic acid, $HOOC[CH(OH)]_4CH_2OH$;

isocitric acid, $HOOCCH(OH)CH(COOH)(CH_2COOH)$; and

tartaric acid, $HOOCCH(OH)CH(OH)COOH$;

(b) an aliphatic alpha-amino carboxylic acid selected from the group consisting of

diethanolglycine, $HOOCCH_2N(CH_2CH_2OH)_2$;

ethanoldiglycine, $(HOCH_2CH_2)N(CH_2COOH)_2$;

ethylenediaminetetraacetic acid, $(-CH_2N[CH_2COOH]_2)_2$;

hydroxyethylethylenediaminetriacetic acid, $(HOOCCH_2)_2NCH_2CH_2N(CH_2CH_2OH)(CH_2COOH)$; and

nitrilotriacetic acid, $N(CH_2COOH)_3$;

(c) hydroxyethylidenediphosphonic acid, $CH_3C(OH)(PO[OH]_2)_2$; and

(d) an aminophosphonic acid selected from the group consisting of

ethylenediaminetetra(methylenephosphonic acid), $(-CH_2N[CH_2PO(OH)_2]_2)_2$;

hexamethylenediaminetetra(methylenephosphonic acid), $(-CH_2CH_2CH_2N[CH_2PO(OH)_2]_2)_2$; and

nitrilotris(methylenephosphonic acid), $N(CH_2PO[OH]_2)_3$.

However, preferred chelating agents for use in this invention are citric acid, gluconic acid and hydroxyethylidenediphosphonic acid.

The amount of chelating agent to be added to the saline water which is to be desalinated must be an amount which is sufficient to chelate substantially all of said corrosion ions (i.e. at least enough to reduce the concentration of unchelated transition metal ions to 0.05 ppm or below). However, it is preferred that the chelating agent is not added in an amount which is substantially in excess of the amount necessary to chelate substantially all of the transition metals. Accordingly, therefore, the amount of chelating agent needed depends on the concentration of the transition metal corrosion ions in the water which is being desalinated and also the stability constant (equilibrium constant) between the chelating agent and the particular transition metal ion. As the concentration of the transition metal ion increases, the amount of chelating agent required must be increased. Also, as the stability constant between the transition metal and the chelating agent decreases, the amount of chelating agent required must be increased. However, when the water to be desalinated contains about 0.5 ppm of transition metal ions, about 1 ppm of chelating agent will be required; while, when the water to be desalinated contains about 10 ppm of transition metal ions, about 45 ppm of the chelating agent will be required.

As will be appreciated by one skilled in the art, the polymeric antiscalants referred to in this specification contain carboxy groups, and therefore they will form base salts. Moreover, these antiscalants can be added to saline water to be desalinated in the form of a base salt. Particularly useful in this regard are alkali metal salts. In like manner, the chelating agents of this invention will form base salts, and the chelating agents can be used in the process of this invention in the form of said base salts. Particularly useful base salts of said chelating agents are alkali metal salts.

The chelating agent is added to the water to be desalinated before or at the same time as the addition of the antiscalant, but the manner in which it is added is not critical. It can be added portionwise, in diluted or undiluted form to a reservoir containing water which is to be desalinated, or it can be metered in on a continuous basis, in diluted or undiluted form to saline water before it enters a desalinator. When the chelating agent is to be added in diluted form, it can be added as a solution in water, or, alternatively, it can be compounded into tablets or capsules with a variety of excipients.

As indicated hereinbefore, the process improvement of the present invention can be used for desalination of a variety of saline water supplies. However, it is particularly suitable for desalination of seawater, both by flash evaporation and reverse osmosis.

The following examples are being provided solely for the purpose of further illustration.

## EXAMPLE 1

### Flash Evaporation

The single stage flash evaporator (SSFE) described by Auerbach and Carruthers (Desalination, Elsevier Scientific Publishing Company, Amsterdam, 31, 279-288 [1979]) but with a modified blowdown/heat recovery section, was operated as described, using synthetic brine having the following composition:

| Ingredient | Concentration (g/kg of water) |
|---|---|
| sodium chloride | 40.06 |
| calcium chloride | 1.662 |
| magnesium sulfate heptahydrate | 10.185 |
| magnesium chloride hexahydrate | 7.549 |
| potassium chloride | 0.996 |
| potassium bromide | 0.144 |
| sodium bicarbonate | 0.3750 |

The above seawater to which an antiscalant (FLOCON 280; a low molecular weight maleic acid-methacrylic acid copolymer; U.S. Patent No. 4,390,670) had been added was flash evaporated for 2 hours; the above seawater to which the above antiscalant and some ferric chloride had been added was flash evaporated for 2 hours; and the above seawater to which the above antiscalant, some ferric chloride and a chelating agent had been added was flash evaporated for 2 hours. After the flash evaporations had been run for 2 hours, the amount of scale which had formed in the brine heater, in the heat recovery chamber and in the flash chamber was measured by washing out with 0.01N hydrochloric acid, followed by potassium hydroxide (pH = 10), and analyzing the wash solutions for calcium and magnesium by atomic absorption spectrometry. The amount of scale found is expressed as "Percent scale," where

$$\text{Percent scale} = 100 \times \frac{\text{mmole scale found}}{\text{mmoles theoretical scale}}$$

Because the levels of $Ca^{2+}$ and $Mg^{2+}$ in seawater are typically 400 and 1,300 ppm, respectively, total theoretical scale is limited by the $HCO_3^-$ level. Also two moles of $HCO_3^-$ are required to produce one mole of $CaCO_3$ or $Mg(OH)_2$. Hence:

$$\text{mmoles theoretical scale} = \frac{(\frac{mg}{lit}\ HCO_3^-) \times (\text{liters seawater})}{2 \times 61}$$

The results are shown in Table I.

Table I

| Run No. | Additives | Concentration (ppm) | Percent Scale | | | |
|---|---|---|---|---|---|---|
| | | | Brine Heater | Heat Recovery Chamber | Flash Chamber | Total |
| 1 | Antiscalant | 3.0 | 0.8 | 1.4 | 3.4 | 5.6 |
| 2 | Antiscalant | 3.0 | 9.4 | 5.2 | 7.4 | 22.0 |
| | $Fe^{3+}$ | 0.5 | | | | |
| 3 | Antiscalant | 3.0 | 1.0 | 0.8 | 4.7 | 6.5 |
| | $Fe^{3+}$ | 0.5 | | | | |
| | Citric Acid | 1.0 | | | | |
| 4 | Antiscalant | 3.0 | 1.7 | 0.6 | 6.3 | 8.6 |
| | $Fe^{3+}$ | 0.5 | | | | |
| | Gluconic acid | 1.0 | | | | |
| 5 | Antiscalant | 3.0 | 5.5 | 1.5 | 4.5 | 11.5 |
| | $Fe^{3+}$ | 0.5 | | | | |
| | HMDTPO* | 3.0 | | | | |

*Hexamethylediaminetetramethylenephosphonate (potassium salt).

## EXAMPLE 2

### Restoration of Antiscalant Activity in the Presence of Iron Using Citric Acid

A water sample was prepared by combining 25 ml of sodium sulfate solution (concentration: 21.625 g/liter), 1 ml of sodium chloride solution (concentration: 250 g/liter) and 0.25 ml of low molecular weight polyacrylic acid solution (concentration: 1,000 ppm). Test solutions were then prepared by adding varying amounts of ferric chloride so that the $Fe^{3+}$ concentration varied from 0 to 1.0 ppm. To each solution was added 25 ml of calcium chloride solution (16.872 g/liter) and the pH was adjusted to $6.0 \pm 0.5$ with dilute sodium hydroxide. The solutions were set aside until equilibrium was reached and then the insoluble calcium deposits were removed by decantation followed by filtration of the liquid phase. The $Ca^{2+}$ concentration ($[Ca^{2+}]$) of the filtered liquid was determined by atomic absorption spectrometry. The results are shown in Table 2.

### Table 2

| $Fe^{3+}$ concentration (ppm) | Antiscalant (active ppm) | $Ca^{2+}$ concentration (ppm) |
|---|---|---|
| 0 | 5 | $7.05 \times 10^{-2}$ |
| 0.1 | 5 | $6.82 \times 10^{-2}$ |
| 0.2 | 5 | $6.94 \times 10^{-2}$ |
| 0.4 | 5 | $5.14 \times 10^{-2}$ |
| 0.8 | 5 | $3.33 \times 10^{-2}$ |
| 1.0 | 5 | $3.54 \times 10^{-2}$ |

The above experiment was repeated except that varying amounts of citric acid were added to the solutions prior to the addition of the iron. The results are shown in Table 3.

## Table 3

| $Fe^{3+}$ concentration (ppm) | Citric Acid concentration (ppm) | Antiscalant (active ppm) | $Ca^{2+}$ concentration (ppm) |
|---|---|---|---|
| 1 | 0.5 | 5 | $4.64 \times 10^{-2}$ |
| 1 | 1.0 | 5 | $6.72 \times 10^{-2}$ |
| 1 | 2.0 | 5 | $6.91 \times 10^{-2}$ |
| 1 | 5.0 | 5 | $6.98 \times 10^{-2}$ |

0140519

-15-

CLAIMS

1. A process for the desalination of saline water containing hardness ions and transition-metal corrosion ions, and in which scale formation is being inhibited by the addition of an antiscalant selected from the low-molecular weight maleic acid-acrylamide-styrene terpolymers or the low molecular weight polymers and co-polymers of maleic, fumaric, acrylic, methacrylic and itaconic acids, or a base salt thereof, characterised in that a chelating agent is added to the saline water, before or at the same time as the addition of said antiscalant, in an amount which is substantially sufficient to chelate said transition-metal ions.

2. A process for the desalination of saline water containing hardness ions and transition-metal corrosion ions, by flash evaporation or reverse osmosis, and in which scale formation is being inhibited by the addition of an antiscalant selected from the low-molecular weight maleic acid-acrylamide-styrene terpolymers or the low molecular weight polymers and co-polymers of maleic, fumaric, acrylic, methacrylic and itaconic acids, or a base salt thereof, characterised in that a chelating agent is added to the saline water, before or at the same time as the addition of said antiscalant, in an amount which is substantially sufficient to chelate said transition-metal ions.

3. The process according to claim 1 or claim 2 wherein the chelating agent is:

(a) an aliphatic alpha-hydroxy acid selected from citric acid, glucoheptonic acid, gluconic acid, isocitric acid or tartaric acid;

(b) an aliphatic alpha-amino carboxylic acid selected from diethanol glycine, ethanol diglycine, ethylenediaminetetraacetic acid, hydroxyethylethylenediaminetriacetic acid or nitrilotriacetic acid;

(c) hydroxyethylidenediphosphonic acid; or

(d)    an aminophosphonic acid selected from ethylenediaminetetra(methylenephosphonic acid), hexamethylenediaminetetra(methylenephosphonic acid) or nitrilotris(methylenephosphonic acid);
or a base salt thereof.

4.    The process according to claim 3, wherein said chelating agent is one of said aliphatic alphahydroxy acids of group (a), or a base salt thereof.

5.    The process according to claim 4, wherein said chelating agent is citric acid, or a base salt thereof.

6.    The process according to claim 4, wherein said chelating agent is gluconic acid, or a base salt thereof.

7.    The process according to claim 3, wherein said chelating agent is hydroxyethylidenediphosphonic acid, the chelating agent of group (c), or a base salt thereof.

**0140519**

**European Patent Office**

**EUROPEAN SEARCH REPORT**

. Application number

EP 84 30 5800

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 796 667 (J. BLOCK et al.) <br> * Whole document * | 1-4 | C 02 F 1/04 <br> C 02 F 5/14 <br> C 02 F 5/12 <br> C 02 F 5/10 |
| X | US-A-4 085 060 (N.I. VASSILEFF) <br> * Whole document * | 1-3,6 | |
| X | FR-A-2 509 714 (MECH. EQUIPMENT) <br> * Page 13, line 29 - page 14, line 18; page 26, claims 1,2 * | 1-3,7 | |
| X | GB-A-1 216 781 (NALCO) <br> * Whole document * | 1-3 | |
| A | US-A-4 223 120 (S.R. KUROWSKY) <br> * Whole document * | 1 | |

TECHNICAL FIELDS SEARCHED (Int. Cl.4)

C 02 F

The present search report has been drawn up for all claims

| Place of search <br> THE HAGUE | Date of completion of the search <br> 14-12-1984 | Examiner <br> VAN AKOLEYEN H.T.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82